# EUROPÄISCHE PATENTSCHRIFT

(11) **EP 0 878 230 B1**
(45) Veröffentlichungstag und Bekanntmachung des Hinweises auf die Patenterteilung: **03.08.2005**
(21) Anmeldenummer: 98106460.3
(22) Anmeldetag: 08.04.1998
(51) Int. Cl.: B01F 15/04, G01N 11/14

(54) **Verfahren und Vorrichtung zum Einstellen der Viskosität von Lacken**
Method and apparatus for the adjustment of the viscosity of paint
Procédé et dispositif pour l'adjustement de la viscosité de la peinture

(30) Priorität: 17.05.1997 DE 19720911
(43) Veröffentlichungstag der Anmeldung: 18.11.1998
(73) Patentinhaber: Grundig Multimedia B.V., 1083HJ Amsterdam (NL)
(72) Erfinder: Bradna, Dana, 90762 Fürth (DE); Kluy, Jürgen, 90762 Fürth (DE); Pfeifer, Jürgen, 90762 Fürth (DE)
(74) Vertreter: Pröll, Jürgen,

(56) Entgegenhaltungen:
- EP-A- 0 539 753
- DE-A- 2 632 076
- US-A- 5 503 003
- DATABASE WPI Section Ch, Week 9033 Derwent Publications Ltd., London, GB; Class J02, AN 86-247636 XP002075868 & IT 1 177 221 B (BOVONE E)
- PATENT ABSTRACTS OF JAPAN vol. 018, no. 476 (C-1246), 6.September 1994 & JP 06 154570 A (TOMOEGAWA PAPER CO LTD), 3.Juni 1994,
- PATENT ABSTRACTS OF JAPAN vol. 016, no. 533 (C-1002), 4.November 1992 & JP 04 200674 A (ASAHI OKUMA IND CO LTD), 21.Juli 1992,
- PATENT ABSTRACTS OF JAPAN vol. 014, no. 561 (P-1142), 13.Dezember 1990 & JP 02 240830 A (HITACHI LTD), 25.September 1990,
- PATENT ABSTRACTS OF JAPAN vol. 097, no. 004, 30.April 1997 & JP 08 323961 A (JAPAN MACH KK), 10.Dezember 1996,
- PATENT ABSTRACTS OF JAPAN vol. 097, no. 007, 31.Juli 1997 & JP 09 061334 A (TONICHI SEISAKUSHO:KK), 7.März 1997,
- PATENT ABSTRACTS OF JAPAN vol. 096, no. 009, 30.September 1996 & JP 08 117663 A (SUMITOMO METAL IND LTD), 14.Mai 1996,
- DATABASE WPI Section EI, Week 8330 Derwent Publications Ltd., London, GB; Class S03, AN 83-722149 XP002075869 & SU 960 579 A (NOVCH POLY)

## Beschreibung

Die Erfindung betrifft ein Verfahren zum Einstellen der Spritzviskosität von Lacken, insbesondere Wasserlacken, sowie eine Anordnung zur Durchführung des Verfahrens.

Aus DE 42 10671 A1 ist ein Verdünnerzugabegerät für Tampondruckmaschinen bekannt. Das Verdünnerzugabegerät besteht aus einem Vorratsbehälter für Verdünner, einem zeit und/oder takt- und/oder volumengesteuerten Ventil, das eine definierte Menge Verdünner in die Tampondruckfarbe eingibt und auf diese Weise den Viskositätsänderungen der Druckfarbe gegensteuert.
Nachteilig ist, daß die Erfindung nicht universell einsetzbar ist und speziell auf Farbsysteme von Tampondruckmaschinen zugeschnitten ist. Außerdem erfolgt keine Erfassung der tatsächlichen Viskosität der Druckfarbe.

Aus DE 195 30 968 A1 ist eine Dosiereinrichtung bekannt, bei der ein giftiges, erosives oder anderweitig aggressives flüchtiges Konzentrat einer größeren Menge eines Verdünnungsmittels in einem regelbaren Verhältnis, während der Zuführung des Gemisches zu einer Verarbeitungsstelle, zugemischt wird. Die Dosiereinrichtung ist mit zwei kugelförmigen Meßkammern ausgestattet, die mittels eines Membrans in zwei Kammerteile unterteilt sind.
Nachteilig bei dieser Erfindung ist, daß die Dosiereinrichtung in einen Ablaufprozeß integriert ist und einen aufwendigen Aufbau hat. Außerdem ist die Dosiereinrichtung nicht auf die Erfordernisse von Lacken angepaßt, sie ist nicht transportabel und universell einsetzbar.

Aus DATABASE WPI Section Ch, Week 9033 Derwent Publications Ltd., London, GB; Class J02, AN 86-247636 WP 002075868 & IT 1 177 221 B ist eine Vorrichtung bekannt zur Einstellung der Viskosität von Farben. Hierzu ist ein Rührwerk und eine Messvorrichtung vorhanden, welche es ermöglicht, den Energieverlust, welcher durch den Widerstand der Flüssigkeit in der sich das Rührwerk dreht, als Größe des Energieverbrauchs am Motor des Rührwerks abzuschätzen.

Aus DATABASE WPI Section EI, Week 8330 Derwent Publications Ltd., London, GB; Class S03, AN 83-722149 WP 002075869 & SU 960 579 A ist ein Viskosimeter zur Bestimmung der Viskosität von Flüssigkeiten bekannt.

Aus PATENT ABSTRACT OF JAPAN vol. 018, no. 476 (C-1246), 6. September 1994 & JP 06 154570 A ist eine Vorrichtung zur Anpassung der Viskosität einer Farbe bekannt. Nachteilig bei dieser gesamten Anordnung ist jedoch, dass die Viskosität lediglich in eine Richtung veränderbar ist.

Aus der WO-A-9116204 ist schließlich eine Anordnung bekannt bei der die Viskositätseinstellung durch die Zufuhr einer vorbestimmten Menge Lack als hochviskoser Komponente und an Verdünner als niedrigviskoser Komponente erfolgt. Auch bei dieser Anordnung lässt sich die Viskosität nur ausgehend vom Lack als Grundmaterial, in Richtung Verdünnung einstellen.

Aufgabe der Erfindung ist es, ein Verfahren zum Einstellen der Spritzviskosität von Lacken, insbesondere Wasserlacken, zu beschreiben, das universell einsetzbar und einfach in Aufbau und Handhabung ist. Weiterhin gehört es zur Aufgabe der Erfindung, eine Anordnung zur Durchführung des Verfahrens anzugeben.

Diese Aufgabe wird durch die Merkmale des Verfahrens nach Anspruch 1 sowie der Anordnung nach Anspruches 2 gelöst. Vorteilhafte Ausgestaltungen und Weiterbildungen der Erfindung sind in den abhängigen Ansprüchen beschrieben.

Die Merkmale der Erfindung werden im folgenden an einem exemplarischen Ausführungsbeispiel an hand der Zeichnungen erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden.

Es zeigt:

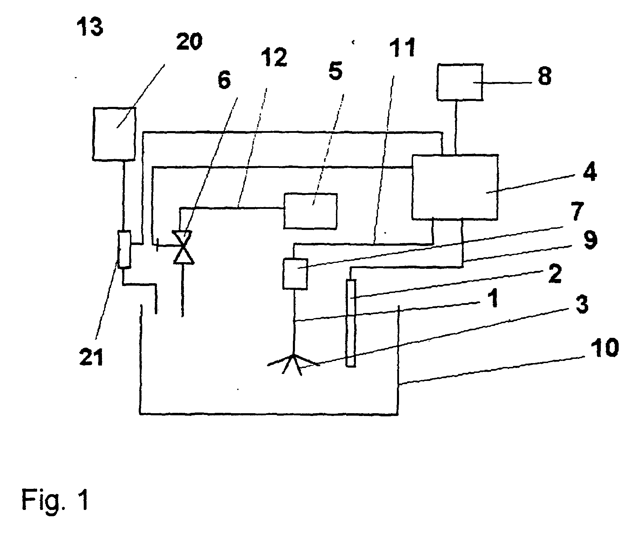

- Fig. 1: einen schematischen Aufbau des Prozeßviskosimeters

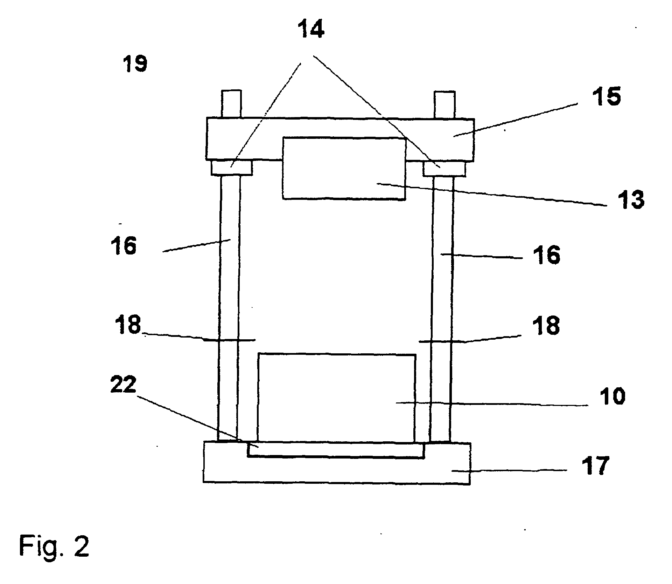

- Fig. 2: einen schematischen Aufbau einer Hubeinrichtung des Prozeßviskosimeter

Das Prozeßviskosimeter 13 besteht aus einem Rührwerk 1, das sich aus einem Rotor 3 und einem Elektromotor 7 zusammensetzt, einem Rotationsmeßfühler 2 zur Ermittlung der Spritzviskosität des Lackes, einer Steuereinheit 4, einem Behälter 5 für Lackverdünnungsmittel, welcher mit einer Membran- oder Zahnradpumpe ausgestattet ist, einer Bedieneinheit 8, einer Steuer-/Datenleitung 9, einer Daten- und Steuerleitung 11, einer Flüssigkeitsleitung 12, einem Behälter 20 für Lackverdickungsmittel, welcher mit einer Membran- oder Zahnradpumpe ausgestattet ist, und zwei Dosiereinheiten 6 und 21.

Das Prozeßviskosimeter 13 ist an einer Hubeinrichtung 19 angebracht. Diese Hubeinrichtung 19 besteht aus einem Sockel 17, zwei Führungsstangen 16, zwei Schrittmotoren 14, einer Befestigungseinrichtung 15, an welcher das Prozeßviskosimeter 13 befestigt ist, und zwei optischen Sensoren 18.

Ein geöffneter, mit Lack gefüllter Behälter 10 ist in, bzw. unter die Hubeinrichtung 19 eingeschoben. Über die Bedieneinheit 8 sind der Spritzviskositätssollwert des Lackes sowie die zulässigen Spritzviskositätstoleranzwerte eingestellt.
Die Steuereinheit 4 senkt dann das Prozeßviskosimeter 13, das an der Befestigungseinrichtung 15 der Hubeinrichtung 19 angebracht ist, mittels der zwei Schrittmotoren 14 in Richtung des Behälters 10 ab. Die Befestigungseinrichtung 15 ist über die zwei Führungsstangen 16 mit dem Sockel 17 verbunden. Die optischen Sensoren 18 überwachen beim Absenkvorgang, das Absenken des Prozeßviskosimeters 13 in den Behälter 10. Die Überwachung erfolgt, um zu verhindern, daß beim Ansenken Berührungen der Komponenten des Prozeßviskosimeters 13 mit dem Behälter 10 geschehen, wodurch es zu einer Beschädigung des Prozeßviskosimeters 13 kommt. Außerdem überwachen die optischen Sensoren 18, daß das Prozeßviskosimeter 13, insbesondere das Rührwerk 1 und der Rotationsmeßfühler 2 ausreichend tief in den Lack des Behälters 10 eintauchen, damit eine gute Vermischungswirkung des Rührwerkes 1 und eine exakte Spritzviskositätsmessung des Rotationsmeßfühlers 2 gewährleistet ist. Zugleich ist dadurch gewährleistet, daß eventuell am Boden des Behälters 10 vorhandene Lacksedimentablagerungen abgelöst und wieder in den Lack eingemischt werden.
Befindet sich das Prozeßviskosimeter 13 in der abgesenkten Position, so senden die optischen Sensoren 18 dies an die Steuereinheit 4. Die Steuereinheit 4 startete daraufhin das Rührwerk 1, damit der Lack in dem Behälter 10 homogen durchmischt wird. Anschließend stellt die Steuereinheit 4 das Rührwerk 1 ab und startet eine Spritzviskositätsmessung des Rotationsmeßfühlers 2. Der Rotationsmeßfühler 2 ermittelt die Spritzviskosität des Lackes und sendet das Ergebnis der Spritzviskositätsmessung über die Steuer-/Datenleitung 9 an die Steuereinheit 4. Die Steuereinheit 4 vergleicht den übermittelten Spritzviskositätsmeßwert mit dem über die Bedieneinheit 8 eingestellten Spritzviskositätssollwert. Liegt der Spritzviskositätsmeßwert im Bereich der eingegebenen Spritzviskositätstoleranzen, so beendet die Steuereinheit 4 den Spritzviskositätseinstellvorgang und fährt das Proßezviskosimeter 13 über die Hubeinrichtung 19, mittels der Schrittmotoren 14, aus dem Behälter 10 heraus und aktiviert eine Benachrichtigungseinheit, um mitzuteilen, daß der Spritzviskositätseinstellvorgang beendet ist.

Liegt der Spritzviskositätsmeßwert außerhalb des Spritzviskositätstoleranzbereiches, arbeitet das Prozeßviskosimeter 13 wie folgt:

Ist die Spritzviskosität des Lackes im Behälter 10 hoch, so steuert die Steuereinheit 4 die Dosiereinheit 6 derart an, daß eine vorbestimmte, über die Bedieneinheit 8 eingestellte Menge an Verdünnungsmittel aus dem Behälter 5 über die Flüssigkeitsleitung 12 in den Behälter 10 einfließt. Anschließend setzt die Steuereinheit 4 das Rührwerk 1 für einen vordefinierten Zeitraum, der ebenfalls über die Bedieneinheit 8 eingestellt ist, in Betrieb. Nachdem die Steuereinheit 4 das Rührwerk 1 abgestellt hat, steuert die Steuereinheit 4 den Rotationsmeßfühler 2 an, damit dieser eine neue Spritzviskositätsmessung durchführt. Das Ergebnis dieser Spritzviskositätsmessung, den Spritzviskositätsmeßwert, vergleicht die Steuereinheit 4 mit dem Spritzviskositätssollwert. Ist die Spritzviskosität des Lackes weiterhin zu hoch, so steuert erneut die Steuereinheit 4 die Dosiereinheit 6 an, damit wiederum eine definierte Menge an Verdünnungsmittel über aus dem Behälter 5 über die Flüssigkeitsleitung 12 in den Behälter 10 einfließt. Anschließend steuert die Steuereinheit 4 das Rührwerk 1 an, damit eine Vermischung des Verdünnungsmittels mit dem Lack im Behälter 10 erfolgt. Anschließend initiiert die Steuereinheit 4 eine erneute Spritzviskositätsmessung des Rotationsmeßfühlers 2 und vergleicht den ermittelten Spritzviskositätsmeßwert mit dem Spritzviskositätssollwert.

Dieser Vorgang wiederholt sich, bis der Spritzviskositätsmeßwert in der Spritzviskositätstoleranz liegt.

Ist die Spritzviskosität des Lackes im Behälter 10 zu niedrig, so steuert die Steuereinheit 4 die Dosiereinheit 21 an, welche eine vordefinierte, über die Bedieneinheit 8 eingestellte, Menge an Verdickungsmittel aus dem Behälter 20 in den Behälter 10 einbringt. Anschließend steuert die Steuereinheit 4 das Rührwerk 1 an, welches das Verdickungsmittel mit dem Lack vermischt. Danach initiiert die Steuereinheit 4 eine Spritzviskositätsmessung des Rotationsmeßfühlers 2. Den hierbei ermittelten Spritzviskositätsmeßwert vergleicht die Steuereinheit 4 mit dem Spritzviskositätssollwert. Liegt der Spritzviskositätsmeßwert außerhalb der Spritzviskositätstoleranz, so steuert die Steuereinheit 4 die Dosiereinheit 21 erneut an, eine definierte Menge an Verdickungsmittel in den Behälter 10 einzubringen, startet anschließend das Rührwerk 1 und initiiert danach die einen erneuten Spritzviskositätsmeßvorgang des Rotationsmeßfühlers 2.
Diesen Vorgang wiederholt die Steuereinheit 4, bis der Spritzviskositätsmeßwert in der in der Spritzviskositätstoleranz liegt.

Eine weitere Ausgestaltung der Erfindung sieht vor, daß die Hubeinrichtung 19 mit einer Waage 22 ausgestattet ist. Die Waage 22 ist an der Hubeinrichtung 19 derart angeordnet, daß der Behälter 10 beim Einbringen gewogen wird. Die Waage 22 ist mit der Steuereinheit 4 verbunden und übermittelt das gewogene Gewicht des Behälters 10 an die Steuereinheit 4. Aus dem ermittelten Gewicht des Behälters 10, der vom Rotationsmeßfühler 2 gemessenen Spritzviskosität des Lackes, dem an der Bedieneinheit 8 eingestellten Spritzviskositätssollwert und der Spritzviskositätstoleranz ermittelt die Steuereinheit 4 die Menge von Verdünnungsmittel bzw. Verdickungsmittel, welche in den Lack im Behälter 10 eingebracht werden muß, damit die voreingestellte, gewünschte Spritzviskosität in dem eingestellten Spritzviskositätstoleranzbereich liegt. Anschließend steuert die Steuereinheit 4 die Dosiereinheit 21 oder 6 an und gibt die ermittelte Menge an Verdickungs- oder Verdünnungsmittel in den Behälter 10 zum Lack zu. Danach startet die Steuereinheit 4 das Rührwerk 1, um das Verdickungs- bzw. Verdünnungsmittel mit dem Lack im Behälter 10 zu vermischen. Anschließend startet die Steuereinrichtung 4 einen Spritzviskositätsmeßvorgang des Rotationsmeßfühlers 2 zur Kontrollmessung der Spritzviskosität.

Eine weitere vorteilhafte, besonders kostengünstige Ausgestaltung der Erfindung sieht vor, daß die zwei Führungsstangen 16 durch eine einzelne Führungsstange ersetzt sind. Außerdem sind die zwei Schrittmotoren 14 durch einen einzigen Elektromotor oder einen pneumatischen Hubzylinder ersetzt und die zwei optischen Sensoren 18 sind durch einen einzigen optischen Sensor ersetzt. In einer noch einfacheren Ausgestaltung der Erfindung ist dieser Sensor 18 durch einen Endschalter ersetzt.

Eine andere vorteilhafte Ausgestaltung der Erfindung sieht vor, daß die Steuereinheit 4 die Spritzviskositätsmessung des Rotationsmeßfühlers 2 bei laufendem Rührwerk 1 durchführt. Im weiteren schaltet die Steuereinheit 4 das Rührwerk 1 erst ab, wenn die Spritzviskositätsmessung im Spritzviskositätstoleranzbereich liegt. Während der Zugabe des Verdickungs- bzw. Verdünnungsmittels zum Lack ist das Rührwerk 1 stetig in Betrieb. Dies hat den Vorteil, daß der Elektromotor des Rührwerkes 1 eine geringere Anzahl von Einschaltvorgängen hat, wodurch seine Lebenszeit erhöht wird. Zu anderen wird ein eingebrachtes Verdickungs- bzw. Verdünnungsmittel sofort mit dem Lack vermischt, so daß ein Aufschwimmen der Verdünnungs- bzw. Verdickungsmittel vermieden wird.

Eine weitere vorteilhafte Ausgestaltung der Erfindung sieht vor, daß das Prozeßviskosimeter 13 mit einer Reinigungseinrichtung für die Baugruppen des Prozeßviskosimeters 13 ausgestattet ist, welche mit dem Lack in dem Behälter 10 in Berührung kommen. Insbesondere ist vorgesehen, den Rotationsmeßfühler 2 und das Rührwerk 1, ausgenommen den Elektromotor 7, nach einem Lackviskositätseinstellvorgang zu reinigen. Hierzu ist das Prozeßviskosimeter 13 mit einer Transporteinrichtung ausgestattet. Diese Transporteinrichtung, die von der Steuereinrichtung 4 überwacht und angesteuert wird, befördert den Behälter 10 mit dem Lack aus dem Arbeitsbereich des Prozeßviskosimeters 13 und bringt einen Behälter mit Reinigungslösung unter das Prozeßviskosimeter 13. Anschließend senkt die Steuereinrichtung 4 das Prozeßviskosimeter 13 in den Behälter mit der Reingungslösung ab und startet das Rührwerk 1 und den Rotationsmeßfühler 2, damit sich an diesen noch befindlicher Restlack von dem vorherigen Lackviskositätseinstellvorgang ablöst.

Eine weitere vorteilhafte Ausgestaltung der Erfindung sieht vor, daß das Prozeßviskosimeter 13 zusätzlich zur Transporteinrichtung mit einer Öffnungs- und Schließeinrichtung für Behälter mit Lack ausgestattet ist. Die Öffnungseinrichtung öffnet einen Behälter mit Lack, bei dem die Spritzviskosität eingestellt werden soll. Anschließend steuert die Steuereinheit 4 die Transporteinrichtung an, damit dieser Behälter zum Prozeßviskosimeter 13 transportiert wird. Dort stellt das Prozeßviskosimeter 13 die Spritzviskosität des Lackes im Behälter - wie oben beschrieben - auf die vorgegebene Spritzviskosität ein. Anschließend steuert die Steuereinheit 4 die Transporteinrichtung an, um den Behälter zur Schließeinrichtung zu transportieren. Dort schließt dann die Schließeinrichtung den Behälter. Außerdem ist die Schließeinrichtung mit einer Druckereinheit ausgestattet. Die Steuereinheit 4 steuert, nachdem die Schließeinrichtung den Behälter mit dem Lack geschlossen hat, die Druckereinheit an, um die aktuell ermittelte Spritzviskosität des Lackes im Behälter, sowie das aktuellen Datum die Uhrzeit und, wenn gewünscht, weitere Daten auszudrucken und auf den Benalter aufzubringen.

In vorteilhafter Weise wird bei Wasserlacken als Verdünnungsmittel deionisiertes Wasser verwendet. Als Verdünnungsmittel wird ein Acrylpolimer eigesetzt, welches im alkalischen Bereich verdickende Wirkung aufweist, oder aber die Viskosität wird durch die Zugabe von Aminen erhöht.

In einer vorteilhaften Ausgestaltung der Erfindung ist die Dosiereinheit 6 beispielsweise in Form eines Magnetventils mit Durchflußmengenbegrenzer realisiert.

Eine weitere vorteilhafte Ausgestaltung der Erfindung sieht vor, daß die mit elektrischem Strom versorgten Elemente des Prozeßviskosimeters 13 explosionsgeschützt ausgeführt sind. In diesem Fall wird als Verdünnungsmittel beispielsweise ein A1-Lösemittel eingesetzt.

Anordnung zur Durchführung des Verfahrens wobei das Rührwerk (1) aus einem Elektromotor (7) und einem Rotor (3) besteht, der Rotor (3) aus zwei Hohlzylindern geringer Höhe mit Querstreben besteht, die zwei Hohlzylinder über eine zu den Hohlzylindern zentrisch angeordnete Stange miteinander verbunden sind, die zwei Hohlzylinder zueinander in einem geringen Abstand im Verhältnis zur Länge des Rührwerkes (1) angeordnet sind, in den zwei Hohlzylindern kurze Rührflügel angeordnet sind, die nicht über die Hohlzylinder hinausragen, an jedem der kurzen Rührflügel ein weiterer Rührflügel angeordnet ist, dieser Rührflügel eine Länge aufweist, die um mindestens zehn Prozent kürzer ist als der halbe Abstand der beiden Hohlzylinder zueinander, dieser Rührflügel in einem Winkel von mindestens 30 Grad und höchstens 80 Grad zur Hohlzylinderebene, in Richtung zwischen den beiden Hohlzylindern, angeordnet ist und die Rührflügel insbesondere in sich mit einer Krümmung von 5 Grad kontinuierlich über ihre Fläche in Richtung der Drehbewegung des Rotors gekrümmt sind.

## Patentansprüche

1. Verfahren zum Einstellen der Spritzviskosität von Lacken, insbesondere Wasserlacken, mit einem Prozessviskosimeter (13) bestehend aus einem Behälter (10) für das Basismaterial, einer Dosiereinheiten (6) zur Zugabe von Lackverdünnungsmitteln, einer Steuereinheit (4), einem Behälter (5) für das Lackverdünnungsmittel, einer Bedieneinheit (8) und einem Rotationsmessfühler (2),wobei ein weiterer Behälter (20) für ein Lackverdickungsmittel und eine weitere Dosiereinrichtung (21) für das Lackverdickungsmittel vorgesehen sind und der Behälter (10) für das Basismaterial gleichzeitig Mischgutbehälter und Messbehälter ist und wobei die Steuereinheit (4) mit Hilfe des Rotationsmessfühlers (2) eine Viskositätsbestimmung des im Behälter (10) enthaltenen Basismaterials durchführt, das Ergebnis der Spritzviskositätsmessung mit dem Spritzviskositätssollwert vergleicht und die Steuereinheit (4), falls das Ergebnis der Spritzviskositätsmessung in Richtung zu hoher Viskosität abweicht, die Spritzviskosität des Lackes durch Zugabe von Lackverdünnungsmittel mittels der Dosiereinheit (6) aus dem Behälter (5) verändert, bis die Spritzviskosität im Spritzviskositätstoleranzbereich liegt und dass die Steuereinheit (4), falls das Ergebnis der Spritzviskositätsmessung in Richtung zu niedriger Viskosität abweicht, die Spritzviskosität des Lackes durch Zugabe von Lackverdickungsmittel in Form von Acrylpolymer oder Aminen mittels der Dosiereinrichtung (21) aus dem Behälter (20) verändert, bis die Spritzviskosität im Spritzviskositätstoleranzbereich liegt.

2. Anordnung zur Durchführung des Verfahrens nach Anspruch 1
**dadurch gekennzeichnet,**
- **dass** das Prozessviskosimeter (13) an einer Hubeinrichtung (19) angeordnet ist,
- **dass** die Hubeinrichtung (19) aus mindestens einem Sockel (17), mindestens einer Führungsstange (16), mindestens einem Elektromotor (14), mindestens einer Befestigungseinrichtung (15) für das Prozessviskosimeter (13) und mindestens einem Sensor (18) besteht, dass die Befestigungseinrichtung (15) über die Führungsstange (16) mit dem Sockel (17) verbunden ist und dass der Elektromotor (14) an der Befestigungseinrichtung (15) angeordnet ist und selbige in vertikaler Richtung mittels des Elektromotors (14) entlang der Führungsstange (16) bewegbar ist,
- **dass** ein geöffneter Behälter (10) mit Lack in oder an der Hubeinrichtung (19) unter dem Prozessviskosimeter (13) angeordnet ist,
- **dass** die Steuereinheit (4) das Prozessviskosimeter (13) zusammen mit der Befestigungseinrichtung (15) mittels des Elektromotors (14) über die Führungsstange (16) in Richtung des Behälters (10) absenkt,
- **dass** der Sensor (18) beim Absenken des Prozessviskosimeters (13) überwacht, dass die Komponenten des Prozessviskosimeters (13) nicht mit dem Behälter (10) in Berührung kommen,
- **dass** der Sensor (18) überwacht, dass ein Rührwerk (1) und ein Rotationsmessfühler (2) des Prozessviskosimeters (13) ausreichend tief in den Lack im Behälter (10) eintauchen,
- **dass** bei Erreichung einer abgesenkten Position des Prozessviskosimeters (13) über dem Behälter (10) die Steuereinheit (4) das Rührwerk (1) in Betrieb setzt, wodurch der Lack im Behälter (10) homogen durchmischt wird,
- **dass** die Steuereinheit (4) nach dem Durchmischen des Lackes im Behälter (10) das Rührwerk (1) anhält und eine Spritzviskositätsmessung mittels des Rotationsmessfühlers (2) startet,
- **dass** die Steuereinheit (4) den Spritzviskositätsmesswert mit dem Spritzviskositätssollwert vergleicht und feststellt, ob der Spritzviskositätsmesswert im Spritzviskositätstoleranzbereich liegt,
- **dass** die Steuereinheit (4), falls der Spritzviskositätsmesswert im Spritzviskositätstoleranzbereich liegt den Spritzviskositätseinstellvorgang beendet und andernfalls eine definierte Menge von Lackverdickungs- oder Lackverdünnungsmittel über die Dosiereinheiten (21) oder (6) in den Behälter (10) einbringt, und mittels des Rührwerkes (1) mit dem Lack im Behälter (10) vermischt, und anschließend wiederum eine Spritzviskositätsmessung initiiert und den gesamten Vorgang wiederholt, bis der Spritzviskositätsmesswert im Spritzviskositätstoleranzbereich liegt, und dann den Spritzviskositätseinstellvorgang beendet,
- **dass** die Steuereinheit (4) nach Beendigung des Spritzviskositätseinstellvorganges das Prozessviskosimeter (13) mittels der Hubeinrichtung (19) nach oben fährt und
- **dass** das Rührwerk (1) aus einem Elektromotor (7) und einem Rotor (3) besteht,
- **dass** der Rotor (3) aus zwei Hohlzylindern geringer Höhe mit Querstreben besteht,
- **dass** die zwei Hohlzylinder über eine zu den Hohlzylindern zentrisch angeordnete Stange miteinander verbunden sind,
- **dass** die zwei Hohlzylinder zueinander in einem geringen Abstand im Verhältnis zur Länge des Rührwerkes (1) angeordnet sind,
- **dass** in den zwei Hohlzylindern kurze Rührflügel angeordnet sind, die nicht über die Hohlzylinder hinausragen,
- **dass** an jedem der kurzen Rührflügel ein weiterer Rührflügel angeordnet ist,
- **dass** dieser Rührflügel eine Länge aufweist, die um mindestens zehn Prozent kürzer ist als der halbe Abstand der beiden Hohlzylinder zueinander,
- **dass** dieser Rührflügel in einem Winkel von mindestens 30 Grad und höchstens 80 Grad zur Hohlzylinderebene, in Richtung zwischen den beiden Hohlzylindern, angeordnet ist.

3. Anordnung zur Durchführung des Verfahrens nach Anspruch 1
**dadurch gekennzeichnet,**
- **dass** das Prozessviskosimeter (13) an einer Hubeinrichtung (19) angeordnet ist,
- **dass** die Hubeinrichtung (19) aus mindestens einem Sockel (17), mindestens einer Führungsstange (16), mindestens einem Elektromotor (14), mindestens einer Befestigungseinrichtung (15) für das Prozessviskosimeter (13) und mindestens einem Sensor (18) besteht, dass die Befestigungseinrichtung (15) über die Führungsstange (16) mit dem Sockel (17) verbunden ist, dass der Elektromotor (14) an der Befestigungseinrichtung (15) angeordnet ist und selbige in vertikaler Richtung mittels des Elektromotors (14) entlang der Führungsstange (16) bewegbar ist, und dass eine Waage (22) an der Hubeinrichtung (19) angeordnet ist, die mit der Steuereinheit (4) verbunden ist,
- **dass** ein geöffneter Behälter (10) mit Lack in oder an der Hubeinrichtung (19) unter dem Prozessviskosimeter (13) angeordnet ist und die Waage (22) das Gewicht des Behälters (10) ermittelt und das Ergebnis an die Steuereinheit (4) übermittelt
- **dass** die Steuereinheit (4) das Prozessviskosimeter (13) zusammen mit der Befestigungseinrichtung (15) mittels des Elektromotors (14) über die Führungsstange (16) in Richtung des Behälters (10) absenkt,
- **dass** der Sensor (18) beim Absenken des Prozessviskosimeters (13) überwacht, dass die Komponenten des Prozessviskosimeters (13) nicht mit dem Behälter (10) in Berührung kommen,
- **dass** der Sensor (18) überwacht, dass ein Rührwerk (1) und ein Rotationsmessfühler (2) des Prozessviskosimeters (13) ausreichend tief in den Lack im Behälter (10) eintauchen,
- **dass** bei Erreichung einer abgesenkten Position des Prozessviskosimeters (13) über dem Behälter (10) die Steuereinheit (4) das Rührwerk (1) in Betrieb setzt, wodurch der Lack im Behälter (10) homogen durchmischt wird,
- **dass** die Steuereinheit (4) nach dem Durchmischen des Lackes im Behälter (10) das Rührwerk (1) anhält und eine Spritzviskositätsmessung mittels des Rotationsmessfühlers (2) startet,
- **dass** die Steuereinheit (4) aus dem von der Waage (22) erfassten Gewicht des Behälters (10), aus dem Spritzviskositätsmesswert des Rotationsmessfühlers (2), dem Spritzviskositätssollwert und dem Spritzviskositätstoleranzbereich die dem Lack im Behälter (10) eine zuzumischende Menge an Lackverdickungs- oder Verdünnungsmittel bestimmt,
- **dass** die Steuereinheit (4) die zuzumischende Menge von Lackverdickungs- oder Lackverdünnungsmittel über die Dosiereinheiten (21) oder (6) in den Behälter (10) einbringt, und mittels des Rührwerkes (1) mit dem Lack im Behälter (10) vermischt und dann den Spritzviskositätseinstellvorgang beendet und
- dass die Steuereinheit (4) nach Beendigung des Spritzviskositätseinstellvorganges das Prozessviskosimeter (13) mittels der Hubeinrichtung (19) nach oben fährt.

4. Anordnung nach einem der Ansprüche 2 oder 3,
**dadurch gekennzeichnet, dass**
der Behälter (10) ein austauschbarer, bereits das Basismaterial enthaltender Behälter ist.

5. Anordnung nach einem der Ansprüche 2 bis 4,
**dadurch gekennzeichnet,**
**dass** Werte für den Spritzviskositätssollwert und den Spritzviskositätstoleranzbereich über die Bedieneinheit (8) eingestellt werden.

6. Anordnung nach einem der Ansprüche 2 bis 5,
**dadurch gekennzeichnet,**
**dass** das Prozessviskosimeter (13) in einer explosionsgeschützten Ausführung realisiert ist.

7. Anordnung nach einem der Ansprüche 2 bis 6,
**dadurch gekennzeichnet,**
- **dass** nach Beendigung eines Spritzviskositätseinstellvorganges eine Transporteinrichtung den Behälter (10) weiter transportiert und einen Behälter mit Reinigungslösung in bzw. unter die Hubeinrichtung (19) befördert,
- **dass** die Steuereinheit (4) das Prozessviskosimeter (13) in den Behälter mit der Reinigungslösung absenkt, wodurch noch vorhandener Restlack von dem vorherigen Spritzviskositätseinstellvorgang vom Prozessviskosimeter abgelöst wird.

8. Anordnung nach einem der Ansprüche 2 bis 7,
**dadurch gekennzeichnet,**
- **dass** das Prozessviskosimeter (13) eine Transporteinrichtung und eine Öffnungs- und Schließeinrichtung für Behälter mit Lack aufweist,
- **dass** die Öffnungseinrichtung die Behälter mit Lack öffnet,
- **dass** die Transporteinrichtung die geöffneten Behälter zum Prozessviskosmeter verbringt und dieses den Spritzviskositätseinstellvorgang durchführt,
- **dass** die Transporteinrichtung nach Beendigung des Spritzviskositätseinstellvorganges den Behälter zur Schließeinrichtung verbringt, welche den Behälter wieder verschließt, und
- **dass** die Schließeinrichtung mit einer Druckereinheit ausgestattet ist, welche von der Steuereinheit (4) angesteuert ist, und die Druckereinheit auf den Behälter die eingestellte Spritzviskosität sowie das Datum und die Uhrzeit des Spritzviskositätseinstellvorganges aufdruckt.

9. Anordnung nach einem der Ansprüche 2 bis 8,
**dadurch gekennzeichnet,**
**dass** der Sensor (18) ein optischer Sensor oder ein Endschalter ist.

10. Anordnung nach einem der Ansprüche 2 bis 9,
**dadurch gekennzeichnet,**
**dass** der Elektromotor (14) ein Schrittmotor ist.

## Claims

1. Method for adjusting the spray viscosity of paints, in particular water-based paints, with a process viscometer (13) consisting of a container (10) for the base material, a dosing unit (6) for adding paint thinners, a control unit (4), a container (5) for the paint thinner, an operating unit (8) and a rotation measuring sensor (2), wherein a further container (20) for a paint thickener and a further dosing device (21) for the paint thickener are provided and the container (10) for the base material is both a container for material to be mixed and a measuring container, and wherein the control unit (4) carries out a viscosity determination on the base material contained in the container (10) with the aid of the rotation measuring sensor (2), compares the result of the spray viscosity measurement with the spray viscosity setpoint value and, if the result of the spray viscosity measurement deviates towards high viscosity, the control unit (4) modifies the spray viscosity of the paint by adding paint thinner from the container (5) by means of the dosing unit (6) until the spray viscosity lies within the spray viscosity tolerance range, and in that if the result of the spray viscosity measurement deviates towards low viscosity, the control unit (4) modifies the spray viscosity of the paint by adding paint thickener in the form of acrylic polymer or amines from the container (20) by means of the dosing device (21) until the spray viscosity lies within the spray viscosity tolerance range.

2. Arrangement for carrying out the method according to Claim 1, **characterised in that**
- the process viscometer (13) is arranged on a lifting device (19),
- **in that** the lifting device (19) consists of at least one support (17), at least one guide rod (16), at least one electric motor (14), at least one fastening device (15) for the process viscometer (13) and at least one sensor (18), **in that** the fastening device (15) is connected to the support (17) via the guide rod (16), and **in that** the electric motor (14) is arranged on the fastening device (15) and the latter can be moved in a vertical direction along the guide rod (16) by means of the electric motor (14),
- **in that** an open container (10) of paint is arranged in or on the lifting device (19), below the process viscometer (13),
- **in that** the control unit (4) lowers the process viscometer (13) together with the fastening device (15) towards the container (10) via the guide rod (16) by means of the electric motor (14),
- **in that** the sensor (18) checks that the components of the process viscometer (13) do not come in contact with the container (10) when the process viscometer (13) is being lowered,
- **in that** the sensor (18) checks that a stirring mechanism (1) and a rotation measuring sensor (2) of the process viscometer (13) are immersed to a sufficient depth in the paint in the container (10),
- **in that** the control unit (4) turns the stirring mechanism (1) on when a lowered position of the process viscometer (13) over the container (10) is reached, so that the paint in the container (10) is homogeneously mixed,
- **in that** the control unit (4) stops the stirring mechanism (1) after the paint in the container (10) has been mixed, and starts a spray viscosity measurement by means of the rotation measuring sensor (2),
- **in that** the control unit (4) compares the spray viscosity measurement value with the spray viscosity setpoint value, and establishes whether the spray viscosity measurement value lies within the spray viscosity tolerance range,
- **in that** the control unit (4) ends the spray viscosity adjustment process if the spray viscosity measurement value lies within the spray viscosity tolerance range, otherwise it introduces a defined quantity of paint thickener or paint thinner into the container (10) via the dosing units (21) or (6) and mixes this with the paint in the container (10) by means of the stirring mechanism (1), and subsequently initiates another spray viscosity measurement and repeats of the entire process until the viscosity measurement value lies within the spray viscosity tolerance range, and then ends the spray viscosity adjustment process,
- **in that** the control unit (4) raises the process viscometer (13) by means of the lifting device (19) after the end of the spray viscosity adjustment process, and
- **in that** the stirring mechanism (1) consists of an electric motor (7) and a rotor (3),
- **in that** the rotor (3) consists of two hollow cylinders of short height with transverse bars,
- **in that** the two hollow cylinders are connected together via a rod arranged centrally with respect to the hollow cylinders,
- **in that** the two hollow cylinders are arranged at a short distance from each other compared with the length of the stirring mechanism (1),
- **in that** short stirring vanes, which do not protrude out of the hollow cylinders, are arranged in the two hollow cylinders,
- **in that** a further stirring vane is arranged on each of the short stirring vanes,
- **in that** this stirring vane has a length which is at least ten per cent shorter than half of the distance between the two hollow cylinders,
- **in that** this stirring vane is arranged at an angle of at least 30 degrees and at most 80 degrees with respect to the hollow cylinder plane, in the direction between the two hollow cylinders.

3. Arrangement for carrying out the method according to Claim 1, **characterised in that**
- the process viscometer (13) is arranged on a lifting device (19),
- **in that** the lifting device (19) consists of at least one support (17), at least one guide rod (16), at least one electric motor (14), at least one fastening device (15) for the process viscometer (13) and at least one sensor (18), **in that** the fastening device (15) is connected to the support (17) via the guide rod (16), **in that** the electric motor (14) is arranged on the fastening device (15) and the latter can be moved in a vertical direction along the guide rod (16) by means of the electric motor (14), and **in that** a weighing balance (22) is arranged on the lifting device (19) and is connected to the control unit (4),
- **in that** an open container (10) of paint is arranged in or on the lifting device (19), below the process viscometer (13), and the weighing balance (22) determines the weight of the container (10) and communicates the result to the control unit (4),
- **in that** the control unit (4) lowers the process viscometer (13) together with the fastening device (15) towards the container (10) via the guide rod (16) by means of the electric motor (14),
- **in that** the sensor (18) checks that the components of the process viscometer (13) do not come in contact with the container (10) when the process viscometer (13) is being lowered,
- **in that** the sensor (18) checks that a stirring mechanism (1) and a rotation measuring sensor (2) of the process viscometer (13) are immersed to a sufficient depth in the paint in the container (10),
- **in that** the control unit (4) turns the stirring mechanism (1) on when a lowered position of the process viscometer (13) over the container (10) is reached, so that the paint in the container (10) is homogeneously mixed,
- **in that** the control unit (4) stops the stirring mechanism (1) after the paint in the container (10) has been mixed, and starts a spray viscosity measurement by means of the rotation measuring sensor (2),
- **in that** the control unit (4) determines an amount of paint thickener or paint thinner to be added to the paint in the container (10) on the basis of the weight of the container (10) recorded by the weighing balance (22), the spray viscosity measurement value of the rotation measuring sensor (2), the spray viscosity setpoint value and the spray viscosity tolerance range,
- **in that** the control unit (4) introduces the quantity of paint thickener or paint thinner, which is to be added, into the container (10) via the dosing units (21) or (6) and mixes this with the paint in the container (10) by means of the stirring mechanism (1), and then ends the spray viscosity adjustment process, and
- **in that** the control unit (4) raises the process viscometer (13) by means of the lifting device (19) after the end of the spray viscosity adjustment process.

4. Arrangement according to one of Claims 2 and 3, **characterised in that** the container (10) is a replaceable container already containing the base material.

5. Arrangement according to one of Claims 2 to 4, **characterised in that** the values of the spray viscosity setpoint value and the spray viscosity tolerance range are adjusted via the operating unit (8).

6. Arrangement according to one of Claims 2 to 5, **characterised in that** the process viscometer (13) is produced in an explosion-protected form.

7. Arrangement according to one of Claims 2 to 6, **characterised in that**
- a transport device transports the container (10) forward after the end of a spray viscosity adjustment process, and delivers a container of cleaning solution into or below the lifting device (19),
- **in that** the control unit (4) lowers the process viscometer (13) into the container of the cleaning solution, so that residual paint still remaining from the previous spray viscosity adjustment process is removed from the process viscometer.

8. Arrangement according to one of Claims 2 to 7, **characterised in that**
- the process viscometer (13) has a transport device and an opening and closing device for containers of paint,
- **in that** the opening device opens the container of paint,
- **in that** the transport device brings the open container to the process viscometer, which carries out the spray viscosity adjustment process,
- **in that** the transport device brings the container to the closing device, which re-closes the container, after the end of the spray viscosity adjustment process, and
- **in that** the closing device is equipped with a printer unit which is driven by the control unit (4), and the printer unit prints the adjusted spray viscosity as well as the date and time of the spray viscosity adjustment process onto the container.

9. Arrangement according to one of Claims 2 to 8, **characterised in that** the sensor (18) is an optical sensor or an end-position switch.

10. Arrangement according to one of Claims 2 to 9, **characterised in that** the electric motor (14) is a stepper motor.

## Revendications

1. Procédé pour ajuster la viscosité de pulvérisation de peintures, en particulier de peintures à l'eau, au moyen d'un viscosimètre de traitement (13) constitué par un récipient (10) pour le matériau de base, une unité de dosage (6) pour ajouter des agents diluants de peinture, une unité de commande (4), un récipient (5) pour l'agent diluant de peinture, une unité de maniement (8) et un capteur de rotation (2), procédé dans lequel sont prévus un autre récipient (20) pour un agent épaississant de peinture et un autre dispositif de dosage (21) pour l'agent épaississant de peinture, et le récipient (10) pour le matériau de base est à la fois le récipient à matière à mélanger et le récipient de mesure, l'unité de commande (4) procède à une détermination de la viscosité du matériau de base contenu dans le récipient (10) à l'aide du capteur de rotation (2), elle compare le résultat de la mesure de viscosité de pulvérisation avec la valeur de consigne de viscosité de pulvérisation, et, si le résultat de la mesure de viscosité de pulvérisation s'écarte dans le sens d'une viscosité trop élevée, l'unité de commande (4) modifie la viscosité de pulvérisation de la peinture par addition d'un agent diluant de peinture provenant du récipient (5) au moyen de l'unité de dosage (6), jusqu'à ce que la viscosité de pulvérisation tombe dans la plage de tolérance de viscosité de pulvérisation, et,
si le résultat de la mesure de viscosité de pulvérisation s'écarte dans le sens d'une viscosité trop faible, l'unité de commande (4) modifie la viscosité de pulvérisation de la peinture par addition d'un agent épaississant de peinture sous forme de polymère acrylique ou d'amines provenant du récipient (20) au moyen de l'unité de dosage (21), jusqu'à ce que la viscosité de pulvérisation tombe dans la plage de tolérance de viscosité de pulvérisation.

2. Agencement pour mettre en oeuvre le procédé selon la revendication 1, **caractérisé en ce que**
- le viscosimètre de traitement (13) est agencé sur un dispositif de levage (19),
- le dispositif de levage (19) est constitué par au moins un socle (17), au moins une barre de guidage (16), au moins un moteur électrique (14), au moins un dispositif de fixation (15) pour le viscosimètre de traitement (13) et au moins un détecteur (18), **en ce que** le dispositif de fixation (15) est relié au socle (17) via la barre de guidage (16), et **en ce que** le moteur électrique (14) est agencé sur le dispositif de fixation (15), et celui-ci est mobile en direction verticale le long de la barre de guidage (16) au moyen du moteur électrique (14),
- un récipient ouvert (10) contenant de la peinture est agencé dans ou sur le dispositif de levage (19) au-dessous du viscosimètre de traitement (13),
- l'unité de commande (4) fait descendre le viscosimètre de traitement (13) conjointement avec le dispositif de fixation (15) au moyen du moteur électrique (14) via la barre de guidage (16) en direction du récipient (10),
- lors de la descente du viscosimètre de traitement (13), le détecteur (18) surveille que les composants du viscosimètre de traitement (13) ne viennent pas en contact avec le récipient (10),
- le détecteur (18) surveille qu'un agitateur (1) et un capteur de rotation (2) du viscosimètre de traitement (13) plongent suffisamment profondément dans la peinture dans le récipient (10),
- lorsqu'une position descendue du viscosimètre de traitement (13) au-dessus du récipient (10) est atteinte, l'unité de commande (4) met en marche l'agitateur (1), suite à quoi la peinture dans le récipient (10) est mélangée de façon homogène,
- après l'opération de mélange de la peinture dans le récipient (10), l'unité de commande (4) met à l'arrêt l'agitateur (1) et fait démarrer une mesure de viscosité de pulvérisation au moyen du capteur de rotation (2),
- l'unité de commande (4) compare la valeur de mesure de la viscosité de pulvérisation à la valeur de consigne de la viscosité de pulvérisation et constate si la valeur mesurée de la viscosité de pulvérisation tombe dans la plage des tolérances de viscosité de pulvérisation,
- au cas où la valeur mesurée de la viscosité de pulvérisation tombe dans la plage des tolérances de viscosité de pulvérisation, l'unité de commande (4) termine l'opération d'ajustement de la viscosité de pulvérisation, sinon elle fait introduire dans le récipient (10) une quantité définie d'agent épaississant ou d'agent diluant de peinture via les unités de dosage (21) ou (6), et la fait mélanger avec la peinture dans le récipient (10) au moyen de l'agitateur (1), et ensuite elle déclenche de nouveau une mesure de la viscosité de pulvérisation et répète toute l'opération jusqu'à ce que la valeur mesurée de viscosité de pulvérisation tombe dans la plage de tolérances de viscosité de pulvérisation, et ensuite elle termine l'opération d'ajustement de la viscosité de pulvérisation,
- après terminaison de l'opération d'ajustement de la viscosité de pulvérisation, l'unité de commande (4) déplace le viscosimètre de traitement (13) vers le haut au moyen du dispositif de levage (19), et
- l'agitateur (1) est constitué par un moteur électrique (7) et par un rotor (3),
- le rotor (3) est constitué par deux cylindres creux de faible hauteur comprenant des traverses,
- les deux cylindres creux sont reliés l'un à l'autre via une barre agencée au centre par rapport aux cylindres creux,
- les deux cylindres creux sont agencés à une distance l'un de l'autre qui est faible par rapport à la longueur de l'agitateur (1),
- des pales d'agitation courtes sont agencées dans les deux cylindres creux, et elles ne dépassent pas au-delà des cylindres creux,
- une autre pale d'agitation est agencée sur chacune des pales d'agitation courtes,
- cette plage d'agitation présente une longueur qui est plus courte d'au moins 10 % que la moitié de la distance des deux cylindres l'un de l'autre,
- cette pale d'agitation est agencée sous un angle de 30° au minimum et de 80° au maximum par rapport au plan des cylindres creux, dans la direction entre les deux cylindres creux.

3. Agencement pour mettre en oeuvre le procédé selon la revendication 1, **caractérisé en ce que**
- le viscosimètre de traitement (13) est agencé sur un dispositif de levage (19),
- le dispositif de levage (19) est constitué par au moins un socle (17), au moins une barre de guidage (16), au moins un moteur électrique (14), au moins un dispositif de fixation (15) pour le viscosimètre de traitement (13) et au moins un détecteur (18), **en ce que** le dispositif de fixation (15) est relié au socle (17) via la barre de guidage (16), et **en ce que** le moteur électrique (14) est agencé sur le dispositif de fixation (15), et celui-ci est mobile en direction verticale le long de la barre de guidage (16) au moyen du moteur électrique (14), **en ce qu'**une balance (22) est agencée sur le dispositif de levage (19), qui est reliée à l'unité de commande (4),
- un récipient ouvert (10) contenant de la peinture est agencé dans ou sur le dispositif de levage (19) au-dessous du viscosimètre de traitement (13), et la balance (22) détermine le poids du récipient (10) et communique le résultat à l'unité de commande (4),
- l'unité de commande (4) fait descendre le viscosimètre de traitement (13) conjointement avec le dispositif de fixation (15) au moyen du moteur électrique (14) via la barre de guidage (16) en direction du récipient (10),
- lors de la descente du viscosimètre de traitement (13), le détecteur (18) surveille que les composants du viscosimètre de traitement (13) ne viennent pas en contact avec le récipient (10),
- le détecteur (18) surveille qu'un agitateur (1) et un capteur de rotation (2) du viscosimètre de traitement (13) plongent suffisamment profondément dans la peinture dans le récipient (10),
- lorsqu'une position descendue du viscosimètre de traitement (13) au-dessus du récipient (10) est atteinte, l'unité de commande (4) met en marche d'agitateur (1), suite à quoi la peinture dans le récipient (10) est mélangée de façon homogène,
- après l'opération de mélange de la peinture dans le récipient (10), l'unité de commande (4) met à l'arrêt l'agitateur (1) et fait démarrer une mesure de viscosité de pulvérisation au moyen du capteur de rotation (2),
- l'unité de commande (4) détermine une quantité à ajouter d'agent épaississant ou d'agent diluant de peinture à partir du poids du récipient (10) détecté par la balance, à partir de la valeur de viscosité de pulvérisation mesurée au moyen du capteur de rotation (2), à partir de la valeur de consigne de viscosité de pulvérisation et à partir de la plage de tolérances de viscosité de pulvérisation,
- l'unité de commande (4) fait introduire dans le récipient (10) la quantité à ajouter d'agent épaississant ou d'agent diluant de peinture via les unités de dosage (21) ou (6), et elle la fait mélanger avec la peinture dans le récipient (10) au moyen de l'agitateur (1) et ensuite elle termine l'opération d'ajustement de la viscosité de pulvérisation, et
- après terminaison de l'opération d'ajustement de la viscosité de pulvérisation, l'unité de commande (4) déplace le viscosimètre de traitement (13) vers le haut au moyen du dispositif de levage (19).

4. Agencement selon l'une ou l'autre des revendications 2 et 3, **caractérisé en ce que** le récipient (10) est un récipient interchangeable qui contient déjà le matériau de base.

5. Agencement selon l'une des revendications 2 à 4, **caractérisé en ce que** des valeurs pour la valeur de consigne de viscosité de pulvérisation et pour la plage de tolérances de viscosité de pulvérisation sont réglées via l'unité de maniement (8).

6. Agencement selon l'une des revendications 2 à 5, **caractérisé en ce que** le viscosimètre de traitement (13) est réalisé sous une forme protégée à l'encontre des explosions.

7. Agencement selon l'une des revendications 2 à 6, **caractérisé en ce que**
- après terminaison d'une opération d'ajustement de la viscosité de pulvérisation, un dispositif de transport continue à transporter le récipient (10) et convoie un récipient contenant une solution de nettoyage jusque dans ou au-dessous du dispositif de levage (19),
- l'unité de commande (4) fait descendre le viscosimètre de traitement (13) dans le récipient contenant la solution de nettoyage, suite à quoi des restes de peinture encore présents de l'opération précédente d'ajustement de viscosité de pulvérisation se détachent du viscosimètre de traitement.

8. Agencement selon l'une des revendications 2 à 7, **caractérisé en ce que**
- le viscosimètre de traitement (13) comprend un dispositif de transport et un dispositif d'ouverture et de fermeture pour récipients contenant de la peinture,
- le dispositif d'ouverture ouvre les récipients contenant de la peinture,
- le dispositif de transport amène les récipients ouverts vers le viscosimètre de traitement et celui-ci procède à l'opération d'ajustement de la viscosité de pulvérisation,
- après terminaison de l'opération d'ajustement de la viscosité de pulvérisation, le dispositif de transport amène le récipient vers le dispositif de fermeture qui referme le récipient, et
- le dispositif de fermeture est muni d'une unité d'impression qui est pilotée par l'unité de commande (4), et l'unité d'impression imprime sur le récipient la viscosité de pulvérisation ajustée ainsi que la date et l'heure de l'opération d'ajustement de la viscosité de pulvérisation.

9. Agencement selon l'une des revendications 2 à 8, **caractérisé en ce que** le détecteur (18) est un détecteur optique ou un interrupteur de fin de course.

10. Agencement selon l'une des revendications 2 à 9, **caractérisé en ce que** le moteur électrique (14) est un moteur pas à pas.
